(19) Europäisches Patentamt
European Patent Office
Office européen des brevets

(11) Publication number: 0 287 273 A2

# (12) EUROPEAN PATENT APPLICATION

(21) Application number: 88303104.9

(22) Date of filing: 07.04.88

(51) Int. Cl.4: C10M 159/12 , //(C10M159/12, 133:04,133:06,135:04,137:02), C10N30:06

(30) Priority: 14.04.87 US 38084

(43) Date of publication of application: 19.10.88 Bulletin 88/42

(84) Designated Contracting States: BE DE FR GB IT NL

(71) Applicant: MOBIL OIL CORPORATION
150 East 42nd Street
New York New York 10017(US)

(72) Inventor: Cardis, Angeline Baird
350 West Front Street
Florence New Jersey 08518(US)

(74) Representative: Colmer, Stephen Gary
Patent Department c/o Mobil Services
Company Limited Mobil Court 3 Clements
Inn
London WC2A 2EB(GB)

## (54) Sulfurised antiwear additives and compositions containing them.

(57) The product of reacting a sulfurized olefin with a dialkyl hydrogen phosphite and primary amine is disclosed as an additive for lubricant composition, including greases, with improved antiwear and retention of copper corrosion protection properties.

EP 0 287 273 A2

## SULFURIZED ANTIWEAR ADDITIVES AND COMPOSITIONS CONTAINING THEM

This invention relates to sulfurized reaction products; more particularly, this invention relates to sulfurized antiwear additives and to lubricant compositions containing them.

It is known to add sulfurized olefins to lubricant compositions to improve their load carrying properties.

The present invention seeks to provide sulfurized additives which provide improved antiwear protection and improved retention of copper corrosion protection when blended into fully formulated lubricants.

According, therefore, to one aspect of the present invention there is provided a product of reacting a sulfurized olefin with a dialkyl hydrogen phosphite and primary amine.

Suitably, the sulfurized olefin comprises a $C_2$ to $C_8$ sulfurized olefin, preferably a $C_4$ sulfurized olefin such as sulfurized isobutylene. The sulfurized olefins may be prepared by any means known in the art; for example, in accordance with U.S. Patents 3,703,804 or 3,703,505.

The dialkyl hydrogen phosphite may have the formula:

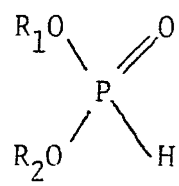

in which $R_1$ and $R_2$, which may be the same or different, each represent a $C_1$ to $C_{30}$ alkyl group. Preferably $R_1$ and/or $R_2$ represent a $C_2$ to $C_8$ alkyl group such as a n-butyl or isobutyl group.

The primary amine may have the formula:

$RNH_2$

in which R represents a $C_1$ to $C_{30}$, preferably a $C_2$ to $C_{20}$, alkyl group; a $C_2$ to $C_{30}$, preferably a $C_3$ to $C_{20}$, alkenyl group; a $C_6$ to $C_{30}$, preferably a $C_6$ to $C_{14}$, aryl group; a $C_7$ to $C_{30}$, preferably a $C_7$ to $C_{14}$, alkaryl group; a $C_7$ to $C_{30}$, preferably a $C_7$ to $C_{14}$, aralkyl group; or a $C_3$ to $C_{30}$, preferably a $C_6$ to $C_{14}$ cycloalkyl group. Each of these hydrocarbyl groups may be substituted or unsubstituted. Particularly preferred are alkylamines and alkenylamines such as oleylamine. An especially preferred product is formed by reacting sulfurized isobutylene with dibutyl hydrogen phosphite and oleylamine.

It is also preferred that the product is prepared from the reactants at a ratio of sulfurized olefin: dialkyl hydrogen phosphite: primary amine from 3.0:0.5:1.0 to 7.0:1.0:1.3. Of the reaction conditions reactor pressure and time are not critical: generally a pressure of ambient or higher is suitable while a reaction time from 2 to 12 hours is satisfactory. It is found that reaction temperature should suitably be above 90°C, preferably from 90° to 130°C; for example, from 95° to 125°C such as 105° to 115°C. It is also preferred that the reactants are mixed together and heated in a one-step reaction.

In accordance with a further aspect of this invention, there is provided a lubricant composition which comprises a major amount of an oil of lubricating viscosity, or a grease prepared therefrom, and a minor amount of a reaction product as herein defined. By "minor amount" is meant herein an amount sufficient to be effective for imparting the requisite degree of antiwear protection. In general, the reaction product may effectively be employed in amounts from 0.01% to 20%, preferably from 0.2% to 5% of the total weight of the lubricant composition.

The oil into which the reaction product is incorporated may be of any suitable lubricating viscosity; for example, from 45 SSU at 100°F to 6000 SSU at 100°F, preferably from 50 SSU at 210°F to 220 SSU at 210°F. Such oils may have viscosity indexes from less than 0 to above 100, preferably from 70 to 95. The average molecular weight of such oils is suitably from 250 to 800. Examples of suitable such oils include mineral oil, synthetic oil or a mixture thereof. Suitable synthetic oils include polyalkenes such as polybutenes, for example polyisobutylene, and polydecene; such polyalkenes may have been hydrogenated for stability. Glycols are also suitable synthetic oils; for example, polyethylene glycol and polypropylene glycol, as are esters of polyfunctional carboxylic acids; for example, esters of trimethylol propane, neopentyl alcohol and pentaerythritol, di(2-ethylhexyl) sebacate, di(2-ethylhexyl) adipate, dibutylphthalate. Other synthetic oils include fluorocarbons, silicate esters, esters of phosphorus-containing acids, silanes, siloxanes and silicones, liquid ureas, ferrocene derivatives, chain-type polyphenols, alkyl-substituted diphenyl ethers and phenoxy phenylethers; for example, butyl-substituted bis(p-phenoxyphenyl) ether, and hydrogenated

mineral oils.

Such lubricants may also contain other additives: for example, detergents, dispersants, inhibitors, antiwear additives, extreme pressure additives, antifoaming agents, pour point depressants and viscosity index improvers.

The lubricating compositions of this invention may be formulated as a grease: in such grease compositions the lubricating oil is suitably employed in an amount sufficiently to give a balanced composition often accounting for the desired quantity of thickening agent and additives.

The following Examples illustrate the invention.

## EXAMPLE 1

Sulfurized isobutylene (122g, 46% sulfur) prepared according to the procedure of U.S. 3,703,504; commercial oleylamine (19.5g, 0.07 moles); and dibutyl hydrogen phosphite (22.5g, 0.11 moles) were stirred together under a nitrogen sweep at a temperature from 50° to 55°C for four hours. The product was filtered and cooled.

## EXAMPLE 2

The same reactants as in Example 1 were reacted at 68° to 72°C for four hours.

## EXAMPLE 3

The same reactants as in Example 1 were reacted at 98° to 104°C for four hours.

## EXAMPLE 4

The same reactants as in Example 1 were reacted at 118° to 122°C for four hours,

## EXAMPLE 5

The same reactants in Example 1 were reacted at 68° to 72°C for eight hours.

### INFRARED FINGERPRINTS

| Example | 1212 $cm^{-1}$ | 1060 $cm^{-1}$ | 730 $cm^{-1}$ | 580 $cm^{-1}$ |
|---|---|---|---|---|
| 1 | No | No | No | No |
| 2 | No | No | No | No |
| 3 | Strong | Yes | Slight | Yes |
| 4 | Strong | Yes | Slight | Yes |
| 5 | No | No | No | No |

## EVALUATION OF PRODUCTS A.

The products herein described were blended with mineral oil and tested in the Shell Four-Ball Test.

Using a modified 4-Ball machine three stationary balls were placed in a lubricant cup. 1.5 percent by weight of each reaction product of the invention was blended with solvent paraffinic bright stock or solvent

paraffinic neutral mineral oil. The lubricant containing the additive to be tested was added to the lubricant cup. A fourth ball was placed in a chuck mounted on a device which could be used to spin the ball at known speeds and loads.

The samples were then tested at various temperatures and speeds, but always at a load of 60 Kg and for 30 minutes. Table 1 summarizes the test results. The 4-Ball Wear Test is also described in U.S. Patent No. 4,405,470.

TABLE 1

Four-Ball Wear Test, 1.5% Additive Concentration
Wear Scar Diameter (mm), 1/2-Inch 52100 Steel Balls,
60 kg, 30 Minutes

| | T °C | 1000 rpm | 2000 rpm |
|---|---|---|---|
| Base Stock | 200 | 1.5 | 2.0 |
| | 390 | 1.8 | 1.9 |
| Sulfurized Olefin of U.S. 3,703,504 | 200 | 0.7 | 1.3 |
| | 390 | 1.6 | 1.4 |
| Example 2 | 200 | 0.4 | 0.5 |
| | 390 | 0.75 | 1.65 |
| Example 3 | 200 | 0.4 | 0.5 |
| | 390 | 0.75 | 1.55 |
| Example 4 | 200 | 0.4 | 0.5 |
| | 390 | 0.9 | 1.40 |

The results clearly show that the procedures of Example 2, 3 and 4 are effective in protecting metal surfaces from wear.

EVALUATION OF PRODUCTS B.

The products of Examples 1 to 4 were blended at 5.0 percent by weight with a fully formulated automotive gear oil and evaluated in ASTM D-130-6 Copper Corrosion test for 3 hours at 121°C. Table 2 summarizes the test results.

TABLE 2

D-130-6 Rating

| | Ex. 1 | Ex. 2 | Ex. 3 | Ex. 4 |
|---|---|---|---|---|
| Initial | 2C | 1B | 2C | 3B |
| 4 Weeks at Ambient | 3B | 3B | 2B | 2D |
| 3 Weeks at 55°C | 3B | 3B | 1B | 1B |

The results clearly demonstrate improved retention of copper corrosion protection for the products of Examples 3 and 4 compared to Examples 1 and 2, where reaction is not indicated by infrared analysis.

## Claims

1. The product of reacting a sulfurized olefin with a dialkyl hydrogen phosphite and primary amine.

2. A product according to claim 1 wherein the sulfurized olefin comprises a $C_2$ to $C_8$ sulfurized olefin.

3. A product according to claim 1 or 2 wherein the dialkyl hydrogen phosphite has the formula:

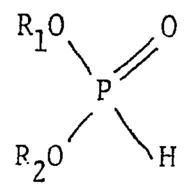

in which $R_1$ and $R_2$, which may be the same or different, each represent a $C_1$ to $C_{30}$ alkyl group.

4. A product according to any preceding claim wherein the primary amine has the formula:

$RNH_2$

in which R represents a $C_1$ to $C_{30}$ alkyl, $C_2$ to $C_{30}$ alkenyl, $C_6$ to $C_{30}$ aryl, $C_7$ to $C_{30}$ alkaryl, $C_7$ to $C_{30}$ aralkyl or $C_3$ to $C_{30}$ cycloalkyl group which may be substituted or unsubstituted.

5. A product according to any preceding claim wherein the sulfurized olefin comprises sulfurized isobutylene, the dialkyl hydrogen phosphite comprises dibutyl hydrogen phosphite and the primary amine comprises oleylamine.

6. A product according to any preceding claim wherein the reactant ratio of sulfurized olefin: dialkyl hydrogen phosphite: primary amine is from 3.0:0.5:1.0 to 7.0:1.0:1.3.

7. A product according to any preceding claim wherein the reaction is effected at a temperature from 90° to 130°C.

8. A product according to any preceding claim wherein the reaction is a one-step reaction.

9. A lubricant composition which comprises a major amount of an oil of lubricating viscosity, or a grease prepared therefrom, and a minor amount of a product according to any of the preceding claims.

10. A lubricant composition according to claim 9 wherein the product according to any of claims 1 to 8 is present in an amount from 0.01% to 20% of the total weight of the lubricant composition.

11. A lubricant composition according to claim 9 or 10 wherein the oil comprises a mineral oil, a synthetic oil or a mixture thereof.